# EUROPÄISCHE PATENTSCHRIFT

(11) **EP 2 026 941 B1**
(45) Veröffentlichungstag und Bekanntmachung des Hinweises auf die Patenterteilung: **17.08.2011**
(21) Anmeldenummer: 07724867.2
(22) Anmeldetag: 04.05.2007
(51) Int. Cl.: B29C 33/52, B29C 45/44

(54) **SPRITZGIESSMASCHINE FÜR SCHMELZKERNTECHNIK**
INJECTION MOLDING MACHINE FOR LOST CORE TECHNOLOGY
PRESSE À MOULER PAR INJECTION POUR LA TECHNIQUE DU NOYAU FUSIBLE

(30) Priorität: 05.05.2006 DE 102006021083
(43) Veröffentlichungstag der Anmeldung: 25.02.2009
(73) Patentinhaber: Franz Schittelkop GmbH & Co, 74731 Walldürn (DE)
(72) Erfinder: SCHITTELKOP, Volker, 74731 Walldürn (DE)
(74) Vertreter: Wohlfrom, Karl-Heinz
(86) Internationale Anmeldenummer: PCT/EP2007/003942
(87) Internationale Veröffentlichungsnummer: WO 2007/128511

(56) Entgegenhaltungen:
- EP-A1- 0 504 971
- WO-A-01/12406
- DE-A1- 3 149 264
- DE-A1- 3 725 679
- DE-C1- 3 829 475
- JP-A- 3 146 249
- JP-A- 5 200 758
- JP-A- 7 001 467
- JP-A- 63 227 310
- JP-A- 2002 225 039
- US-A- 5 085 569
- ALTMANN O ET AL: "SCHMELZKERNTECHNIK IM MOTORENBAU" KUNSTSTOFFE, CARL HANSER VERLAG, MUNCHEN, DE, Bd. 81, Nr. 3, 1. März 1991 (1991-03-01), Seiten 179-186,187, XP000287479 ISSN: 0023-5563
- "DIE ZUKUNFT DER SCHMELZKERNTECHNOLOGIE HAT GERADE ERST BEGONNEN" PLASTVERARBEITER, HUETHIG GMBH, HEIDELBERG, DE, Bd. 44, Nr. 5, 1. Mai 1993 (1993-05-01), Seiten 26-29, XP000393019 ISSN: 0032-1338
- HAUCK C ET AL: "OPTIMIZATION OF THE FUSIBLE CORE TECHNIQUE FOR INJECTION MOLDING OF THERMOPLASTICS" INDUSTRIAL AND PRODUCTION ENGINEERING, CARL HANSER VERLAG. MUNCHEN, DE, Bd. 12, Nr. 1, 1988, Seiten 24-26, XP001176507 ISSN: 0343-334X

## Beschreibung

Die vorliegende Erfindung betrifft eine Spritzgießmaschine, umfassend ein einen Formhohlraum umfassendes Spritzgießwerkzeug, in dem durch Umspritzen eines in den Formhohlraum eingelegten Formkerns aus Metall mit einem Spritzgießwerkstoff ein Formteil herstellbar ist, und ein Schmelzwerkzeug, durch das der mit dem Spritzgießwerkstoff umspritzte Formkern ausschmelzbar ist.

Es ist bekannt Werkstücke, die einen meist länglichen Hohlraum besitzen, im Spritzgießverfahren mittels Kernausschmelztechnik herzustellen. Beispiele für mit dieser Technik gegossene Werkstücke sind u.a. Ansaugrohre für Kraftfahrzeugmotoren, Kühlmittelleitungen in Kraftfahrzeugen und dergleichen.

Bei der Kernausschmelztechnik wird zunächst ein Formkern aus einem leicht schmelzbaren Material (z. B. einer Wismutlegierung) hergestellt und in einen Formhohlraum einer Spritzgießform eingelegt. Daraufhin wird der Formkern mit dem eigentlichen Spritzgießmaterial umspritzt und samt dem eingeschlossenen (festen) Formkern aus der Spritzgießform entformt. Um den Formkern zu entfernen, war es bisher bei der Kernausschmelztechnik üblich, den Formkern durch Eintauchen des entformten Formteils in ein Bad einer Ausschmelzflüssigkeit (z.B. einer unter dem Handelsnamen "Lutron" durch die BASF AG kommerziell angebotenen Alkoholverbindung) auszuschmelzen. Der verflüssigte Kern wird dann abgezogen und zur Herstellung eines neuen Formkerns wiederverwendet Das Formteil wird aus dem Lutronbad entnommen, gereinigt und dann weiterverarbeitet.

Bei herkömmlich zur Kernausschmelztechnik eingesetzten Spritzgießanlagen ist eine Fertigungsstraße erforderlich, die als einzelne Komponenten umfasst: eine Spritzgießmaschine, eine Kerngießmaschine, mehrere Roboter, ein Kemausschmelzbad mit Lutron als Ausschmelzflüssigkeit, eine Heizung für die Ausschmelzflüssigkeit; einen beheizten Großtank für die Ausschmelzflüssigkeit, eine Wascheinrichtung zum Entfernen der Ausschmelzflüssigkeit vom Formteil sowie eine Trockenstation für das Formteil. Vor allem der relativ voluminöse, beheizte Tank für die Ausschmelzflüssigkeit sowie die weiteren Vorkehrungen zum Reinigen und Trocknen der Werkstücke von der Ausschmelzflüssigkeit nach dem Ausschmelzvorgang erfordern einen entsprechenden Platzaufwand. Ein solche Fertigungsanlage ist daher sowohl in der Anschaffung als auch hinsichtlich der Betriebskosten verhältnismäßig aufwändig. Daher wurde bislang die Kernausschmelztechnik trotz qualitativ ansprechender Ergebnisse für viele Anwendungen als unrentabel angesehen und stattdessen wurden häufig andere Verfahrensweisen (z.B. Vibrations-Schweißverfahren) eingesetzt, die aber oft nicht zu vergleichbaren Resultaten führten. So hat etwa das zur Herstellung von Formteilen mit länglichen Hohlräumen, etwa Rohre, häufig angewandte Vibrations-Schweißverfahren den Nachteil, dass am Werkstück Schweißflansche erforderlich sind, um zwei Werkstückhälften miteinander verschweißen zu können. Da die Schweißflansche vom fertigen Werkstück abstehen, beeinträchtigen sie das Erscheinungsbild und können bei engen Einbausituationen, wie sie im Automobilbau häufig auftreten, zu Platzproblemen führen.

Beispiele für Spritzgießmaschinen gemäß dem Oberbegriff des Anspruchs 1, bei denen ein Ausschmelzfluid, insbesondere eine Ausschmelzflüssigkeit, erforderlich ist, um Wärme zum Formkern zu übertragen bzw. den verflüssigten Formkern auszutreiben, sind bekannt aus: O. Altmann und O. Parr, "Schmelzkerntechnik im Motorenbau", Kunststoffe 2376, 1991, S. 179 - 186, C. Hauck and A. Schneiders, "Optimization of the Fusible Core Technique for Injection Molding of Thermoplastics", Industrial & Production Engineering 12, 1988, S. 24 - 26, US 5 085 569, DE 31 49 264, JP 2002-225039, JP 7-1467 und DE 38 29 475. Eine Spritzgießvorrichtung zur Herstellung von U-förmigen Teilen mittels Kernausschmelztechnik und mit Induktionsheizung, wie im Oberbegriff des Anspruchs 1 genannt, ist aus der JP 63-227310 bekannt. Die WO 01/12406 und JP 3-146249 offenbaren weitere Spritzgießanlagen.

Daher wäre es wünschenswert, Produkte, die insbesondere im Automobilbereich Verwendung finden, mittels Kernausschmelztechnik bei vernünftigem Aufwand herstellen zu können. Aufgabe der vorliegenden Erfindung ist es daher, eine zur Kernausschmelztechnik geeignete Spritzgießanlage bereitzustellen, die mit deutlich geringerem Aufwand als herkömmlich bekannte anlagen arbeiter.

Diese Aufgabe wird erfindunsgemäß gelöst durch eine Spritzgießmaschine gemäß Anspruch 1. Erfindungsgemäß umfasst das Schmelzwerkzeug wenigstens ein stromführendes Element, durch das im Material des Formkerns Wirbelströme erzeugbar sind.

Erfindungsgemäß wird nicht wie bisher bei der Kernausschmelztechnik üblich der z.B, aus einer Wismutlegierung bestehende Formkern durch Eintauchen des gegossenen und umspritzten Formteils in ein Bad einer Lutronlösung ausgeschmolzen, sondern durch elektromagnetische Induktion zum Schmelzen gebracht. Hierbei werden im Kernmaterial Wirbelströme erzeugt, die zum Schmelzen des Kernes führen. Der geschmolzene Kern kann als flüssige Schmelze von einer Pumpe abgesaugt werden bzw. unter Druck gesetzt werden und zum Formen eines neuen Kerns wiederverwendet werden.

Sobald das stromführende Element von elektrischem Strom durchflossen wird, erzeugt es ein Magnetfeld. Ändert sich der elektrische Strom mit der Zeit, so werden durch das einhergehende zeitlich veränderliche Magnetfeld in einem im Magnetfeld befindlichen elektrisch leitfähigen Körper Wirbelströme erzeugt, die zu einer Temperaturerhöhung des elektrisch leitfähigen Körpers führen. Dieses Prinzip der Induktionsheizung hat den besonderen Vorteil, dass es zur Übertragung von zur Erwärmung des Formkerns führender Energie zum Formkern nicht erforderlich ist, das umspritzte Kunststoffmaterial des Formteils von außen aufzuheizen, sondern dass die Temperaturerhöhung des Formkerns gezielt im Material des aus Metall gebildeten Formkerns erzeugt werden kann.

Der neuartige Einsatz einer Induktionsheizung zum Ausschmelzen des Kernmaterials macht die Verwendung einer Ausschmelzflüssigkeit entbehrlich. Dies bringt Vorteile hinsichtlich des für das Verfahren aufzubringenden Aufwands sowie hinsichtlich der Sicherheit des Verfahrens. Gerade letzterer Aspekt spielt eine wichtige Rolle, denn von der als Ausschmelzflüssigkeit im Stand der Technik verwendeten Alkohohlverbindung ging im Zusammenhang mit deren Erwärmung eine enorme Brandgefahr aus. Darüber hinaus sind erfindungsgemäß alle Vorkehrungen zum Speichern und Zirkulieren der Ausschmelzflüssigkeit, insbesondere die Bereitstellung eines beheizten Großtanks für die Ausschmelzflüssigkeit, entbehrlich. Es ist auch nicht mehr erforderlich, die Werkstücke nach dem Ausschmelzen und Entfernen des Formkerns aufwändig von der Ausschmelzflüssigkeit zu reinigen und zu trocknen. Damit wird es erstmals möglich, eine kompakte Spritzgießmaschine zu bauen, die alle für die Herstellung von Werkstücken mittels Kernausschmelztechnik erforderlichen Komponenten enthält.

Als stromführendes Element kommen vor allem geeignet ausgebildete Induktionsspulen bzw. lnduktionsspulenanordnungen in Betracht, die um das umspritzte Formteil herum angeordnet sind. Vorzugsweise wird man hierbei das Formteil im-Schmelzwerkzeug im Bereich des Innenraums der Induktionsspulen anordnen, in dem die Magnetfeldlinien am dichtesten liegen. Dann kann man mit relativ geringer Leistungsaufnahme und kompakten Spulenabmessungen bereits ohne weiteres ausreichende Temperaturerhöhungen im Formkern erzielen.

Das Schmelzwerkzeug umfasst eine abschließbare Kammer, in der das Formteil aufnehmbar ist. Die abschließbare Kammer kann zum Einen in das Spritzgießwerkzeug integriert sein und etwa durch den Formhohlraum des Spritzgießwerkzeugs selbst gebildet sein, sodass der vom Spritzgießmaterial umspritzte Formkern im Spritzgießwerkzeug selbst zum Schmelzen gebracht werden kann. Der Arbeitsablauf wird hierdurch vereinfacht und die Spritzgießmaschine kann äußerst kompakt konstruiert sein. Bei dieser Bauweise bietet es sich an, das stromführende Element in das Spritzgießwerkzeug zu integrieren, wobei dann das Spritzgießwerkzeug aus einem Werkstoff hergestellt sein sollte, der sich durch das verwendete Induktionsverfahren nicht allzu stark aufheizt. Beispielsweise kann das Spritzgießwerkzeug aus einem elektrisch nicht leiftfähigen Werkstoff hergestellt sein, aber auch Stahl ist ein durchaus geeigneter Werkstoff für das Spritzgießwerkzeug, denn die geringe Wärmeleitfähigkeit von Stahl im Vergleich zu derjenigen des Materials für den Schmelzkern führt ebenfalls dazu, dass das Spritzgießwerkzeug eine relativ zum Schmelzkern geringere Erwärmung erfährt. Die zur Erwärmung des Spritzgießwerkzeugs führende Wärmeenergie kann in diesem Fall sogar über einen Temperierölkreislauf mit Wärmepumpe abgeführt werden und zu weiteren. Funktionen benutzt werden, beispielsweise zur Temperierung einer Formkernmaterlalleitung mit Formkernmaterialpumpe, durch die geschmolzenes Formkernmaterial transportiert wird.

Alternativ kann die abschließbare Kammer zum Anderen separat vom Spritzgießwerkzeug vorgesehen sein. Das umspritzte Formteil samt Formkern wird dann aus dem Spritzgießwerkzeug entnommen und in die abschließbare Kammer eingebracht. Dort wird der Formkern des Formteils durch elektromagnetische Induktion zum Schmelzen gebracht. In beiden Fällen kann der aufgeschmolzene Kern dann einfach abgeführt werden und beispielsweise zur Herstellung eines neuen Formkerns wiederverwendet werden.

Unabhängig davon, ob das Schmelzwerkzeug in das Spritzgießwerkzeug integriert ist und das Ausschmelzen des Formkerns im Spritzgießwerkzeug erfolgt oder das Schmelzwerkzeug separat vom Spritzgießwerkzeug ausgebildet ist, kann im einfachsten Fall das stromführende Element innerhalb der abschließbaren Kammer angeordnet sein, z.B. an den Innenwänden der Kammer angebracht oder ausgebildet sein. Dann kann das stromführende Element in unmittelbarer Nähe des Formteils verlaufen, was einerseits eine besonders kompakte Ausgestaltung des Schmelzwerkzeugs erlaubt und andererseits nur eine vergleichsweise geringe Stromaufnahme erfordert. Beispielsweise kann das stromführende Element auch der Außenoberfläche des Formteils angepasst sein. Ein besonderer Vorteil dieser Anordnung liegt darin, dass die Heizleistung an die zu schmelzende Masse des Formkerns angepasst sein kann, also beispielsweise an Stellen in der Nähe von großen Formkernvolumina eine relative große Heizleistung erzeugt werden kann (d.h. stärkere Wirbelströme induziert werden), während an anderen Stellen eine geringere Heizleistung erzeugt werden kann.

Das stromführende Element kann auch außerhalb der abschließbaren Kammer angeordnet sein, und zwar entweder alternativ zur bereits genannten

Anordnung in der Kammer oder auch als zusätzliche Maßnahme dazu. Beispielsweise kann/können eine oder mehrere Induktionsspulen mit geeigneter Form um die Wände der abschließbaren Kammer herum verlaufen bzw. an deren Außenwänden angebracht sein. Man kann dann die Anordnung aus Kammer und stromführendem Element bei unterschiedlichen Formteilen einsetzen, solange diese in der Kammer aufnehmbar sind.

Die Kammer ist evakuierbar. Sofern das Ausschmelzen im Spritzgießwerkzeug selbst erfolgt, bedeutet dies, dass der Formhohlraum evakuierbar ist. Das Ausschmelzen und Entfernen des Formkerns findet dann unter Vakuumbedingungen statt. Dies verhindert, dass das ausgeschmolzene Kernmaterial mit Luftsauerstoff in Kontakt gelangt und oxidiert, was eine Wiederverwertung des Formkernmaterials verhindern würde. Ein ähnlicher Oxidationsschutz wurde herkömmlich (bei ungleich höherem Aufwand) durch die Ausschmelzflüssigkeit erzielt.

Alternativ könnte die Kammer (bzw. ggfs. der Formhohlraum des Spritzgießwerkzeugs) mit einem gasförmigen Schutzfluid befüllbar sein, sodass das Ausschmelzen des Formkerns unter einer entsprechenden Schutzumgebung, ggfs. unter Überdruck, stattfinden kann. Vor allem kommt hier in Betracht, das Ausschmelzen unter einer Schutzgasatmosphäre aus Stickstoff oder evtl. einem Edelgas durchzuführen.

Es ist günstig, wenn eine Formkernfördereinrichtung vorgesehen ist, durch die geschmolzenes Formkernmaterial aus dem Formteil förderbar ist. Vorzugsweise befindet sich das Formteil hierbei im Schmelzwerkzeug. Die Formkernfördereinrichtung kann eine Pumpenanordnung umfassen, durch die wenigstens eine mit dem flüssigen Formkernmaterial in Verbindung stehende oder bringbare Leitung unter Unterdruck setzbar ist, um das geschmolzene Formkernmaterial abzusaugen. Geschmolzen soll hierbei einen Zustand bedeuten, bei dem die Viskosität des Formkernmaterials niedrig genug ist, um wenigstens ein zähflüssiges Fließen zu ermöglichen.

Alternativ kann die Formkernfördereinrichtung eine Kompressoranordnung oder/und Schieberanordnung umfassen, durch die eine Kraft auf das Formkernmaterial ausübbar ist, um geschmolzenes Formkernmaterial aus dem Formteil zu drücken. Insbesondere kann dies dadurch realisiert werden, dass wenigstens eine mit dem geschmolzenen Formkernmaterial in Verbindung stehende oder bringbare Leitung, die mit einem inerten Fluid (z.B. Stickstoff oder eine inerte Hydraulikflüssigkeit) gefüllt ist, unter Überdruck setzbar ist, um geschmolzenes Formkernmaterial durch eine andere Außenöffnung des Formteils herauszudrücken. Als Schieberanordnung kommt etwa ein Hydraulikzylinder mit angebautem Sammelzylinder in Betracht.

Die Spritzgießmaschine kann darüber hinaus ein Formkernwerkzeug umfassen, durch das der Formkern herstellbar ist, sowie ggfs. eine Fördereinrichtung zum Transportieren des Formkerns vom Formkernwerkzeug zum Spritzgießwerkzeug und Einlegen des Formkerns in das Spritzgießwerkzeug umfassen, wenn das Formkernwerkzeug separat vom Spritzgießwerkzeug ausgebildet ist. Dann bietet es sich außerdem an, Mittel vorzusehen, durch die das geschmolzene Formkernmaterial vom Schmelzwerkzeug in das Formkernwerkzeug rückführbar ist. Beispielsweise kann eine Leitung oder können mehrere entsprechende Leitungen vorgesehen sein, die das Schmelzwerkzeug mit dem Formkernwerkzeug verbinden. Der Querschnitt dieser Leitungen ist dann abhängig von der Viskosität des Formkernmaterials, der Länge der Leitungen und Leistung der Formkernfördereinrichtung zu wählen. Auch eine Isolierung bzw. Heizung dieser Leitung kann ggfs. vorgesehen sein.

Das Formkernwerkzeug kann beispielsweise auch einen zweiten Formhohlraum umfassen, in den ein zu gießendes Bauteil, das ein Teil des herzustellenden Formteils ist (z.B. eine Regelklappe) einbringbar ist und dann mit einem Schmelzkernmaterial umgießbar ist, um den Formkern zu bilden. Auf diese Weise lassen sich mit der erfindungsgemäßen Spritzgießmaschine auch Formteile in der sogenannten Mehrkomponententechnik (z.B. Zwei- oder Drei-Komponententechnik) fertigen.

Es kann auch eine Fördereinrichtung vorgesehen sein, durch die das Formteil aus dem Spritzgießwerkzeug entnehmbar und zum Schmelzwerkzeug transportierbar ist. Ggfs. kann eine Fördereinrichtung so ausgelegt sein, dass sie sich sowohl zum Transport des Formkerns vom Formwerkzeug zum Spritzgießwerkzeug als auch zum Transport des Formteils vom Spritzgießwerkzeug zum Schmelzwerkzeug eignet.

Um auch bei komplizierter Geometrie des Formkerns bzw. des diesem entsprechenden Hohlraums des Formteils ein möglichst vollständiges Abziehen bzw. Ablaufen des verflüssigten Formkemmaterials aus dem Formteil zu erreichen, ist es ist vorteilhaft, wenn das Formteil im Schmelzwerkzeug bewegbar gelagert ist, insbesondere drehbar oder schwenkbar gelagert ist. Entsprechende Stellmittel (beispielsweise ein Schwenkantrieb um bis zu drei Achsen) können ohne weiteres auch als Teil der genannten Fördereinrichtung integriert sein.

Ein weiterer Vorteil ergibt sich, wenn die Lagerung des Formteils im Schmelzwerkzeug auch eine Vibrationsbewegung des Formteils gestattet, um das Auslaufen des verflüssigten Formkernmaterials zu unterstützen bzw. zu beschleunigen. Hierfür kann beispielsweise einer Schwenkwelle zum Lagern des Formteils ein Vibtrationsantrieb zugeordnet sein. Der Vibrationsantrieb kann darüber hinaus auch dazu genutzt werden, das Formteil im Magnetfeld der stromdurchflossenen Induktionsspule(n) hin- und her zu bewegen, um im Formkern Wirbelströme zu induzieren, die diesen zur Verflüssigung bringen. In diesem Fall kann das Ausschmelzen des Kerns sogar durch einen elektrischen Gleichstrom durch die Induktionseinrichtung bewirkt werden.

Da die erfindungsgemäße Spritzgießmaschine völlig ohne viel Platz erfordernde Komponenten auskommt, kann die Spritzgießmaschine als kompaktes Einzelmaschinenmodul vorgesehen sein, in dem wenigstens das Spritzgießwerkzeug und das Schmelzwerkzeug sowie ggfs. das Formkernwerkzeug untergebracht sind. Die Platzerfordernisse sind dann kaum höher als bei herkömmlichen Schweißautomaten oder Spritzgießmaschinen ohne Kernausschmelztechnik. Das Einzelmaschinenmodul kann ein Gehäuse umfassen, in dem alle Komponenten untergebracht sind.

Zusätzlich kann im oder am Einzelmaschinenmodul eine Fördereinrichtung vorgesehen sein, durch die nach Entfernen des Formkerns das Formteil aus dem Schmelzwerkzeug entformbar ist, ggfs. das Formteil mit Formkern vom Spritzgießwerkzeug zum Schmelzwerkzeug transportierbar ist und ggfs. der Formkern vom Formkernwerkzeug in das Spritzgießwerkzeug transportierbar ist. Die Fördereinrichtung kann ggfs. ebenfalls in dem Gehäuse integriert sein. Das kompakte Einzelmaschinenmodul kann dann beispielsweise zur Durchführung der einzelnen Verfahrensschritte bzw. zum Transport des Formteils von einem Verfahrensschritt zum nächsten einen gemeinsamer Robotermanipulator aufweisen, der vorzugsweise zentral angesteuert wird. Die Spritzgießmaschine ist dann nicht nur kompakt, sondern auch äußerst flexibel einsetzbar.

Der Formkern ist vorzugsweise aus einer Wismutlegierung hergestellt. Bewährt haben sich beispielsweise Legierungen mit etwa 90 Gewichts-% Wismutanteil. Die Schmelztemperatur des Formkemmaterials sollte so klein sein, dass bei dieser Temperatur noch keine starke Erweichung des umspritzten Kunstoffmaterials auftritt. Bei einer Schmelztemperatur von kleiner als 160 °C, vorzugsweise bei ca. 140 °C, treten noch keine starken Verformungen des Spritzgießmaterials auf.

Die Heizleistung des Schmelzwerkzeugs kann entsprechend der Erweichungstemperatur des verwendeten Spritzgießmaterials eingestellt werden, z.B. sodass die Temperatur des Formteils maximal ca. 175 °C beträgt. Da erfindungsgemäß primär das Formkernmaterial erwärmt wird, und erst vom Formkern aus Wärme auf den umspritzten Kunststoff übertragen wird, reicht dies in der Regel aus, um den Formkern vollständig zum Schmelzen zu bringen.

Das Formteil weist vorzugsweise einen rohrförmigen Hohlraum auf. Dann kann der Formkern von beiden offenen Enden her einfach aus dem Formteil ausfließen.

Als Spritzgießwerkstoff eignen sich eine Reihe thermoplastischer Kunststoffe, duroplastischer Kunststoffe und auch Mischformen. Insbesondere eignen sich relativ wärmebeständige Kunststoffe, aus den z.B. Ansaugrohre für Kraftfahrzeugmotoren oder Kühlwasserkrümmer hergestellt sind.

Die vorliegende Erfindung wir im Folgenden unter Bezugnahme auf die begleitende Zeichnung näher erläutert.

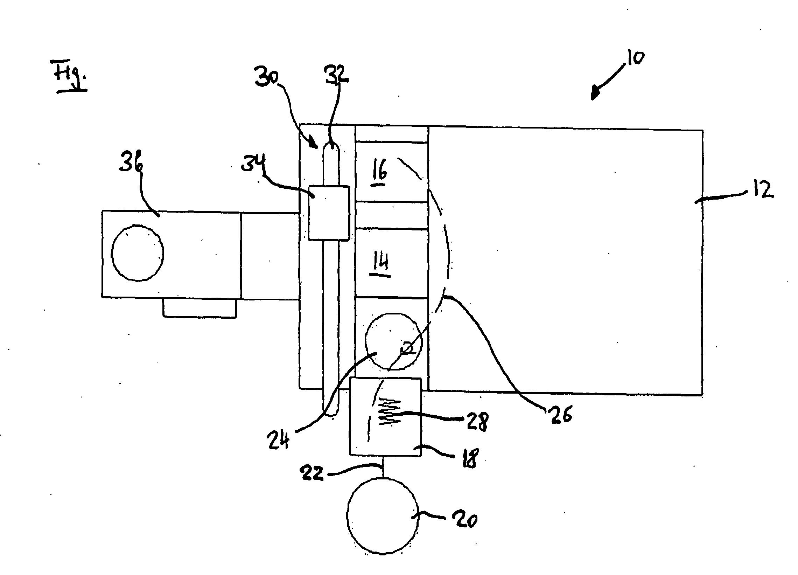

Die einzige Figur zeigt eine stark vereinfachte schematische Darstellung einer erfindungsgemäßen Spritzgießmaschine und ihrer Komponenten.

Die in der Figur gezeigte Spritzgießmaschine 10 mit Ausschmelzvorrichtung umfasst einen Spritzgießmaschinenkörper 12, der alle für eine herkömmlich bekannte Spritzgießmaschine erforderlichen Antriebs-, Steuer- und Zubehörkomponenten enthält, mit Ausnahme des eigentlichen Spritzgießwerkzeugs 14, das am Spritzgießmaschinenkörper 12 angebracht ist. Der Spritzgießmaschinenkörper 12 besitzt vergrößerte Werkzeugaufspannplatten, auf die zentral das Spritzgießwerkzeug 14 und seitlich oder höhenversetzt zum Spritzgießwerkzeug 14 ein als Formkernemgießwerkzeug zum Gießen eines Formkerns ausgebildetes Formwerkzeug 16 aufgespannt ist. Damit ist bei der Spritzgieß-Schmelzkemmaschine 10 keine separate Formkemgießmaschine erforderlich, sondern es wird nur eine einzige Spritzgießmaschine mit zwei zugeordneten Werkzeugen verwendet, mittels denen jeweils ein oder mehrere Formkem(e) und ein oder mehrere Formteil(e) herstellbar sind. Dies spart Raum und Investitionsaufwand für die Anlage.

Das Formkernwerkzeug kann auch ein nicht gezeigtes separates Schließkraft-Druckkissen aufweisen. Dann kann die Schließkraft für das Formkernwerkzeug 16 unabhängig erzeugt und geregelt werden.

Eine dicht abschließbare und evakuierbare Ausschmelzkammer 18 zum Vakuum-Ausschmelzen des Formkemmaterials ist auf der dem Kerngießwerkzeug 16 gegenüberliegenden Seite des Spritzgießwerkzeugs 14 ebenfalls seitlich oder höhenversetzt zum Spritzgießwerkzeug 14 am Spritzgießmaschinenkörper 12 angebracht. Der Spritzgießmaschine 10 ist darüber hinaus eine Vakuumpumpe 20 zur Erzeugung eines Vakuums in der Ausschmelzkammer 18 zugeordnet. Die Vakuumpumpe 20 steht über eine Vakuumleitung 22 mit der Vakuumkammer 18 in Verbindung und wird über die Steuerung der Spritzgießmaschine 12 angesteuert.

Zwischen dem Spritzgießwerkzeug 14 und der Vakuumkammer 18 befindet sich bei der gezeigten Ausführungsform eine Formkemmaterialpumpe 24 zum Fördern von verflüssigtem Formkernmaterial von der Ausschmelzkammer 18 zum Formkernwerkzeug 16 über eine gestrichelt angedeutete Formkermaterialleitung 26. Neben oder anstatt der Formkemmaterialpumpe 24 kann auch eine hydraulische Einspritzeinheit vorgesehen sein, um verflüssigtes Formkernmaterial zur Wiederverwertung in das Formkernwerkzeug 16 einzuspritzen.

Eine beispielsweise als Spule ausgebildete Induktionseinrichtung 28 ist bei der gezeigten Ausführungsform in der Vakuumkammer 18 vorgesehen. Die Induktionseinrichtung 28 ist mit einer nicht gezeigten Stromquelle elektrisch verbunden, die ebenfalls durch die Steuerung der Spritzgießmaschine 12 angesteuert wird. Wenn ein elektrischer Kontakt zwischen der Induktionseinrichtung 28 und der Stromquelle geschaltet wird, fließt ein elektrischer Strom durch die Induktionseinrichtung 28, der dazu führt, dass in der Umgebung der Induktionseinrichtung 28 ein Magnetfeld erzeugt wird.

Bringt man in die Vakuumkammer 18 ein einen Formkern enthaltendes Formteil ein und schaltet die Verbindung zwischen der Induktionseinrichtung 28 und der Stromquelle ein, so befindet sich das Formteil im Bereich eines durch die Induktionseinrichtung 28 erzeugten Magnetfelds. Sofern der das Formteil durchsetzende magnetische Fluss dieses Magnetfelds zeitlich veränderlich ist, erzeugt das Magnetfeld im Formkern des Formteils Wirbelströme. Eine zeitliche Änderung des magnetischen Flusses kann entweder lurch eine zeitliche Änderung des die die Induktionseinrichtung 28 durchfließenden Stroms erzielt werden oder/und auch dadurch, dass das Formteil im Magnetfeld bewegt wird, beispielsweise durch Betätigung einer der Lagerung des Formteils zugeordneten Vibrationseinrichtung. Die Wirbelströme führen zu einer Erwärmung des Formkerns und schließlich zum Schmelzen des Formkerns.

Die Induktionseinrichtung 28 kann auch außerhalb der Vakuumkammer 18 vorgesehen sein, solange gewährleistet ist, dass der magnetische Fluss des durch die Induktionseinrichtung 28 erzeugten Magnetfelds nicht durch die Wände der Vakuumkammer 18 abgeschirmt wird.

Der Vakuumkammer 18 ist eine nicht gezeigte Wende- und Schwenkvorrichtung zugeordnet, durch die das Formteil im der Vakuumkammer beweglich gelagert ist. Das Formteil ist insbesondere um mindestens eine Achse, vorzugsweise um drei Achsen, schwenkbar gelagert und kann daher so verschwenkt werden, dass das verflüssigte Formkernmaterial unter Schwerkraftwirkung durch eine nach unten gerichtete Öffnung - bevorzugt in Längsrichtung eines länglich ausgebildeten Formkerns bzw. Hohlraums im Formteil - aus dem Formteil ausfließen kann. Gegebenenfalls können bei komplizierter Geometrie des Formkerns auch mehrere Ausflussstellen für das verflüssigte Formkernmaterial nacheinander angefahren werden. Zur Unterstützung des Ausfließens, insbesondere um eine Fließbewegung des verflüssigten Materials in Beginn zu setzen oder um die Ausfließgeschwindigkeit zu beschleunigen, ist der der Wende- und Schwenkeinrichtung zusätzlich eine nicht dargestellte Vibrationseinrichtung zugeordnet, durch die das Formteil entlang einer seiner Schwenkachsen hin und her bewegbar ist.

Um das Formkernmaterial ablaufen zu lassen, wird ein in der Formkernmaterialleitung 26 angeordnetes Ventil auf einen entsprechenden Steuerbefehl hin geöffnet. Die Formkernmaterialleitung 26 umfasst Verbindungsschläuche bzw. Rohre und Trichter, die allesamt beheizbar sind, um eine Verfestigung des verflüssigten Formkemmaterials zu verhindern.

Die Spritzgießmaschine umfasst weiterhin einen Roboter 30, der eine entlang einer Schiene 32 verfahrbare Manipulatoranordnung 34 aufweist. Die Manipulatoranordnung 34 enthält einen oder mehrere Greifer durch die sowohl der Formkern als auch das Formteil greifbar ist. Die Manipulatoranordnung ist von dem Formkernwerkzeug 16 zum Spritzgießwerkzeug 14 und von dort weiter zu der Vakuumkammer 18 verfahrbar, wobei der Formkern bzw. das Formteil durch die Manipulatoranordnung 34 in das jeweilige Werkzeug einlegbar ist und darin gehalten werden kann bzw. daraus entnehmbar ist und zur nächsten Arbeitsstation transportierbar ist.

Ein typischer Funktionsablauf zur Herstellung eines einen Hohlraum aufweisenden Formteils mit der in der Figur gezeigten Spritzgießmaschine 10 sieht folgendermaßen aus: Zunächst wird im Formkernwerkzeug 16 ein Formkern gegossen. Der Formkern wird dann durch den Robotermanipulator 34 aus dem Formkernwerkzeug entnommen, der Robotermanipulator entlang der Schiene 32 zum Spritzgießwerkzeug verfahren und dann der Formkern durch den Robotermanipluator 34 in das Spritzgießwerkzeug 14 eingelegt. Dort wird der Formkern mit Kunststoff umspritzt. Schließlich wird das gebildete Kunststoffformteil samt dem umspritzten Formkern durch den Robotermanipulator 34 entnommen. Der Robotermanipulator 34 wird entlang der Schiene 32 zur Vakuumkammer 18 verfahren und bringt das Formteil in die Vakuumkammer 18 ein, die vakuumdicht verschlossen wird, sobald das Formteil eingelegt ist. Anschließend saugt die Vakuumpumpe 20 die Vakuumkammer ab und erzeugt dort ein Vakuum. Die Stromversorgung der Induktionsspulen 28 wird eingeschaltet und der Formkern ausgeschmolzen. Das Ventil der Formkernleitung 26 wird geöffnet, sobald das Formkernmaterial sich ausreichend verflüssigt hat, und das Formkernmaterial wird durch die Pumpe 24 abgesaugt und zum Formkernwerkzeug 16 zurück gefördert, wo es zur Herstellung eines neuen Formkerns in einem Folgezyklus erneut eingespritzt wird. Das nunmehr einen Hohlraum aufweisende Kunststoffteil wird durch den Robotermanipulator 34 aus der Vakuumkammer 18 entnommen und zur weiteren Verarbeitung zu einer Verarbeitungsstraße 36 transportiert.

Durch die erfindungsgemäße Spritzgießmaschine können auch Kombiteile (z.B. im Zwei- bzw. Drei-Komponenten-Spritzgießverfahren) hergestellt werden, wie z.B. geschlossene Lüftungsrohre mit eingespritzter Regelklappe. Zur Anfertigung von Kombiteilen wird in das Spritzgießwerkzeug 14 ein sog. Familienwerkzeug eingebaut, im Fall des genannten Lüftungsrohrs z.B zur Herstellung eines Lüftungsrohrs und einer inneren Verschluss- bzw. Regelklappe. In diesem Fall wird zunächst im Spritzgießwerkzeug 14 in einem ersten Nest eine Regelklappe erzeugt, dann entnimmt der Robotermanipulator 34 die Klappe aus dem Spritzgießwerkzeug 14 im ersten Nest und legt diese in das Formkernwerkzeug 16 ein, wo die Klappe mit Formkernmaterial umgossen wird. Dann entnimmt der Robotermanipulator 34 den Formkern mit eingegossener Klappe und legt diesen erneut in das Spritzgießwerkzeug 14 ein, wo der Formkern mit Kunststoffmaterial umspritzt wird. Der weitere Verfahrensablauf entspricht dem oben beschriebenen.

Der Klappenwerkstoff braucht nicht mit den Werkstoff für das Rohr identisch zu sein, wobei bei der Auswahl des Klappenwerkstoffes die Regeln der Rohstoffhersteller bezüglich der Verbindungs- oder Anschmelztauglichkeit bei beiden Werkstoffe berücksichtigt werden, um ein Festbacken der Klappenlagerung zu verhindern. Diese Technik bietet hohe Rationalisierung und beste Dichtigkeit.

Das Ausschmelzen findet unter Vakuumbedingungen statt. Dies verhindert, dass das ausgeschmolzene Kernmaterial mit Luftsauerstoff in Kontakt gelangt, und führt zu einem Oxidationsschutz. Alternativ könnte in der Vakuumkammer 18 auch eine Schutzgasatmosphäre, z.B aus Stickstoff oder einem Edelgas, ausbildbar sein, unter der das Ausschmelzen stattfindet. Das Ausschmelzen kann dann bei beliebigem Druck durchgeführt werden, insbesondere unter Überdruck, um das Eindringen von Umgebungsluft auszuschließen.

Als Formkernmaterial kommen Metalllegierungen mit möglichst geringem Schmelzpunkt zum Einsatz. In der Praxis haben sich bestimmte Legierungen mit Hauptbestandteil Wismut bewährt. Die Schmelztemperatur sollte unter 160 ° C liegen um eine Schädigung des Kunststoffmantels zu vermeiden, idealerweise sollte Sie bei ca. 140. ° C liegen. Dann kann die Induktionsleistung so eingestellt werden dass die Temperatur im Bereich des Werkstücks bzw. dessen Kerns sich auf max. 175 ° C einstellt.

Als herzustellende Werkstücke kommen vor allem Kunststoffkörper mit länglichen, vorzugsweise rohrrörmigen Hohlräumen in Betracht, wobei die Kunststoffkörper aus einem relativ wärmebeständigen Kunststoff hergestellt sind, z. B. Ansaugrohre für Kraftfahrzeugmotoren oder Teile davon sowie Kühlmittel-, Öl- und Luftleitungen für Kraftfahrzeugmotoren. Solche Werkstücke wurden bislang v. a. im (Vibrations)- Schweißverfahren hergestellt, mit dem Nachteil, dass am Werkstück Schweißflansche erforderlich sind, die vom fertigen Werkstück abstehen und daher zu Platzproblemen führen können. Desweiteren können durch Fehler in der Schweißnaht Ausfälle des ganzes Bauteiles hervorgerufen werden.

## Patentansprüche

1. Spritzgießmaschine (10), umfassend
ein einen Formhohlraum umfassendes Spritzgießwerkzeug (14), in dem durch Umspritzen eines in den Formhohlraum eingelegten Formkerns aus Metall mit einem Spritzgießwerkstoff ein Formteil herstellbar ist, und
ein Schmelzwerkzeug (18), durch das der mit dem Spritzgießwerkstoff umspritzte Formkern ausschmelzbar ist,
wobei das Schmelzwerkzeug (18) wenigstens ein stromführendes Element (28) umfasst, durch das im Material des Formkerns Wirbelströme erzeugbar sind, und
wobei das Schmelzwerkzeug (18) eine abschließbare Kammer umfasst, in der das Formteil aufnehmbar ist,
**dadurch gekennzeichnet, dass** die Kammer (18) evakuierbar ist.

2. Spritzgießmaschine (10) nach Anspruch 1, **dadurch gekennzeichnet, dass** das stromführende Element (28) wenigstens eine Induktionsspule umfasst.

3. Spritzgießmaschine (10) nach Anspruch 1 oder 2, **dadurch gekennzeichnet, dass** das stromführende Element (28) innerhalb der Kammer (18) angeordnet ist.

4. Spritzgießmaschine (10) nach einem der Ansprüche 1 bis 3, **dadurch gekennzeichnet, dass** das stromführende Element (28) außerhalb der Kammer (18) angeordnet ist.

5. Spritzgießmaschine (10) nach einem der Ansprüche 1 bis 4, **gekennzeichnet durch** eine Formkernfördereinrichtung (24, 26), **durch** die geschmolzenes Formkernmaterial aus dem Formteil förderbar ist.

6. Spritzgießmaschine (10) nach Anspruch 5, **dadurch gekennzeichnet, dass** die Formkernfördereinrichtung (24, 26) eine Pumpenanordnung (24) umfasst, durch die wenigstens eine mit dem flüssigen Formkernmaterial in Verbindung stehende oder bringbare Leitung (26) unter Unterdruck setzbar ist, um das geschmolzene Formkernmaterial abzusaugen.

7. Spritzgießmschine (10) nach Anspruch 5, **dadurch gekennzeichnet, dass** die Formkernfördereinrichtung (24, 26) eine Kompressoranordnung oder/und Schieberanordnung umfasst, durch die eine Kraft auf das Formkernmaterial ausübbar ist, um das geschmolzene Formkernmaterial aus dem Formteil zu drücken.

8. Spritzgießmaschine (10) nach einem der Ansprüche 1 bis 7, **gekennzeichnet durch** ein Formkernwerkzeug (16), **durch** das der Formkern herstellbar ist, sowie ggfs. eine Fördereinrichtung (30) zum Transportieren des Formkerns vom Formkernwerkzeug (16) zum Spritzgießwerkzeug (14) und Einlegen des Formkerns in das Spritzgießwerkzeug (14).

9. Spritzgießmaschine (10) nach Anspruch 8, **dadurch gekennzeichnet, dass** das geschmolzene Formkernmaterial vom Schmelzwerkzeug (18) in das Formkernwerkzeug (16) rückführbar ist.

10. Spritzgießmaschine (10) nach einem der Ansprüche 1 bis 9, **gekennzeichnet durch** eine Fördereinrichtung (30) **durch** die das Formteil aus dem Spritzgießwerkzeug (14) entnehmbar und zum Schmelzwerkzeug (18) transportierbar ist.

11. Spritzgießmaschine (10) nach einem der Ansprüche 1 bis 10, **dadurch gekennzeichnet, dass** das Formteil im Schmelzwerkzeug (18) bewegbar gelagert ist, vorzugsweise drehbar oder schwenkbar gelagert ist.

12. Spritzgießmaschine (10) nach einem der Ansprüche 1 bis 11, **dadurch gekennzeichnet, dass** dem Schmelzwerkzeug (18) ein Vibrationsantrieb zugeordnet ist, durch den das im Schmelzwerkzeug (18) gelagerte Formteil hin und her bewegbar ist.

13. Spritzgießmaschine (10) nach einem der Ansprüche 1 bis 12, **dadurch gekennzeichnet, dass** die Maschine als Einzelmschinenmodul ausgebildet ist, in dem wenigstens das Spritzgießwerkzeug (14) und das Schmelzwerkzeug (18) sowie ggfs. das Formkernwerkzeug (16) untergebracht sind.

14. Spritzgießmaschine (10) nach Anspruch 13, **gekennzeichnet durch** eine im oder am Einzelmaschinenmodul vorgesehene Fördereinrichtung (30), **durch** die nach Entfernen des Formkerns das Formteil aus dem Schmelzwerkzeug (18) entformbar ist, ggfs. das Formteil mit Formkern vom Spritzgießwerkzeug (14) zum Schmelzwerkzeug (18) transportierbar ist und ggfs. der Formkern vom Formkernwerkzeug (16) in das Spritzgießwerkzeug (14) transportierbar ist.

15. Spritzgießmaschine (10) nach einem der Ansprüche 1 bis 14, **dadurch gekennzeichnet, dass** die Heizleistung des Schmelzwerkzeugs (18) derart ausgelegt ist, dass die Temperatur des Formteils maximal ca. 175 °C beträgt.

## Claims

1. An injection molding machine (10), comprising
an injection molding tool (14) having a mold cavity, in which a molded part can be produced by overmolding a mold core of metal inserted into the mold cavity using an injection molding material, and
a melting tool (18) by means of which the mold core overmolded with the injection molding material can be melted out,
wherein the melting tool (18) comprises at least one current-carrying element (28) by which eddy currents can be generated in the material of the mold core, and
wherein the melting tool (18) comprises a closable chamber adapted to accommodate the molded part therein,
**characterized in that** the chamber (18) is adapted to be evacuated.

2. The injection molding machine (10) of claim 1,
**characterized in that** the current-carrying element (28) comprises at least one induction coil.

3. The injection molding machine (10) of claim 1 or 2,
**characterized in that** the current-carrying element (28) is arranged inside of the chamber (18).

4. The injection molding machine (10) of any of claims 1 to 3, **characterized in that** the current-carrying element (28) is arranged outside of the chamber (18).

5. The injection molding machine (10) of any of claims 1 to 4, **characterized by** a mold core conveying means (24, 26) adapted to convey melted more core material out of the molded part.

6. The injection molding machine (10) of claim 5,
**characterized in that** the mold core conveying means (24, 26) comprises a pump arrangement (24) by means of which at least one line (26) communicating with or adapted to be communicated with the liquid mold core material can be subjected to vacuum pressure for suction-withdrawing the melted mold core material.

7. The injection molding machine (10) of claim 5,
**characterized in that** the mold core conveying means (24, 26) comprises a compressor arrangement and/or slide arrangement adapted to exert a force on the mold core material for pushing the melted mold core material out of the molded part.

8. The injection molding machine (10) of any of claims 1 to 7, **characterized by** a mold core tool (16) adapted to produce the mold core, and optionally a conveying means (30) for transporting the mold core from the mold core tool (16) to the injection molding tool (14) and for inserting the mold core into the injection molding tool (14).

9. The injection molding machine (10) of claim 8,
**characterized in that** the melted mold core material is adapted to be returned from the melting tool (18) to the mold core tool (16).

10. The injection molding machine (10) of any of claims 1 to 9, **characterized by** a conveying means (30) through which the molded part can be removed from the injection molding tool (14) and transported to the melting tool (18).

11. The injection molding machine (10) of any of claims 1 to 10, **characterized in that** the molded part is supported in the melting tool (18) so as to be movable, and preferably is rotatably or pivotably supported.

12. The injection molding machine (10) of any of claims 1 to 11, **characterized in that** the melting tool (18) has a vibration drive associated therewith by means of which the molded part arranged in the melting tool (18) can be reciprocated.

13. The injection molding machine (10) of any of claims 1 to 12, **characterized in that** the machine is in the form of an individual machine module accommodating therein at least the injection molding tool (14) and the melting tool (18) and optionally the mold core tool (16).

14. The injection molding machine (10) of claim 13,
**characterized by** a conveying means (30) provided in or at the individual machine module, by means of which, after removal of the mold core, the molded part can be removed from the melting tool (18), optionally the molded part with the mold core can be transported from the injection molding tool (14) to the melting tool (18) and optionally the mold core can be transported from the mold core tool (16) into the injection molding tool (14).

15. The injection molding machine (10) of any of claims 1 to 14, **characterized in that** the heating capacity of the melting tool (18) is designed such that the temperature of the mold part is at maximum approx. 175 °C.

## Revendications

1. Machine de moulage par injection (10), comprenant
un outil de moulage par injection (14) comprenant un espace creux de moulage dans lequel, par enrobage par injection, avec un matériau de moulage par injection, d'un noyau de moulage en métal inséré dans l'espace creux de moulage, une pièce moulée est fabricable, et
un outil de fusion (18) par lequel le noyau de moulage enrobé du matériau de moulage par injection peut être mis en fusion,
l'outil de fusion (18) comprenant au moins un élément conducteur d'électricité (28) à travers lequel des courants de Foucault peuvent être générés dans le matériau du noyau de moulage, et
l'outil de fusion (18) comprenant une chambre obturable dans laquelle la pièce moulée peut être logée,
**caractérisée en ce que** la chambre (18) peut être évacuée.

2. Machine de moulage par injection (10) selon la revendication 1, **caractérisée en ce que** l'élément conducteur d'électricité (28) comprend au moins une bobine d'induction.

3. Machine de moulage par injection (10) selon la revendication 1 ou 2, **caractérisée en ce que** l'élément conducteur d'électricité (28) est agencé à l'intérieur de la chambre (18).

4. Machine de moulage par injection (10) selon une des revendications de 1 à 3, **caractérisée en ce que** l'élément conducteur d'électricité (28) est agencé à l'extérieur de la chambre (18).

5. Machine de moulage par injection (10) selon une des revendications de 1 à 4, **caractérisée par** un dispositif d'acheminement de noyau de moulage (24, 26) par lequel du matériau de noyau de moulage en fusion peut est acheminé hors de la pièce moulée.

6. Machine de moulage par injection (10) selon la revendication 5, **caractérisée en ce que** le dispositif d'acheminement de noyau de moulage (24, 26) comprend un agencement de pompage (24) par lequel au moins une conduite (26) qui est en relation avec le matériau de noyau de moulage fluide ou qui peut être placée peut être soumise à une dépression afin d'aspirer le matériau de noyau de moulage en fusion.

7. Machine de moulage par injection (10) selon la revendication 5, **caractérisée en ce que** le dispositif d'acheminement de noyau de moulage (24, 26) comprend un agencement de compresseur et/ou un agencement de coulisseau par lequel une force peut être exercée sur le matériau de noyau de moulage afin de presser le matériau de noyau de moulage en fusion hors de la pièce moulée.

8. Machine de moulage par injection (10) selon une des revendications de 1 à 7, **caractérisée par** un outil de moulage du noyau (16) par lequel le noyau de moulage est fabricable, ainsi que, le cas échéant, par un dispositif d'acheminement (30) pour le transport du noyau de moulage de l'outil de moulage du noyau (16) à l'outil de moulage par injection (14) et insertion du noyau de moulage dans l'outil de moulage par injection (14).

9. Machine de moulage par injection (10) selon la revendication 8, **caractérisée en ce que** le matériau de noyau de moulage en fusion peut être réacheminé par l'outil de fusion (18) dans l'outil de moulage du noyau (16).

10. Machine de moulage par injection (10) selon une des revendications de 1 à 9, **caractérisée par** un dispositif d'acheminement (30) par lequel la pièce moulée peut être prélevée de l'outil de moulage par injection (14) et transportée à l'outil de fusion (18).

11. Machine de moulage par injection (10) selon une des revendications de 1 à 10, **caractérisée en ce que** la pièce moulée est logée de manière mobile dans l'outil de fusion (18), de préférence de manière à pouvoir tourner ou pivoter.

12. Machine de moulage par injection (10) selon une des revendications de 1 à 11, **caractérisée en ce qu'**un entraînement à vibrations par lequel la pièce moulée logée dans l'outil de fusion (18) peut être mue de manière à décrire un mouvement de va-et-vient est affecté à l'outil de fusion (18).

13. Machine de moulage par injection (10) selon une des revendications de 1 à 12, **caractérisée en ce que** la machine est réalisée sous forme de module de machine individuel dans lequel sont logés au moins l'outil de moulage par injection (14) et l'outil de fusion (18) ainsi qu'éventuellement l'outil de moulage du noyau (16).

14. Machine de moulage par injection (10) selon la revendication 13, **caractérisée par** un dispositif d'acheminement (30) prévu dans ou sur le module de machine individuel, par lequel la pièce moulée peut être démoulée de l'outil de fusion (18) après enlèvement du noyau de moulage, ou, le cas échéant, la pièce moulée renfermant le noyau de moulage peut être transportée de l'outil de moulage par injection (14) à l'outil de fusion (18), ou, le cas échéant, le noyau de moulage peut être transporté de l'outil de moulage du noyau (16) à l'outil de moulage par injection (14).

15. Machine de moulage par injection (10) selon une des revendications de 1 à 14, **caractérisée en ce que** la capacité de chauffage de l'outil de fusion (18) est conçue de telle manière que la température de la pièce moulée s'élève au maximum à env. 175° C.
